(19) **Europäisches Patentamt European Patent Office Office européen des brevets**

(11) **EP 4 596 094 A1**

(12) **EUROPEAN PATENT APPLICATION**
published in accordance with Art. 153(4) EPC

(43) Date of publication:
06.08.2025 Bulletin 2025/32

(51) International Patent Classification (IPC):
*B01D 69/02* (2006.01)     *B01D 69/10* (2006.01)
*B01D 71/34* (2006.01)

(21) Application number: 23872214.4

(22) Date of filing: 22.09.2023

(52) Cooperative Patent Classification (CPC):
B01D 69/02; B01D 69/10; B01D 71/34

(86) International application number:
PCT/JP2023/034606

(87) International publication number:
WO 2024/070989 (04.04.2024 Gazette 2024/14)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 30.09.2022 JP 2022157515
25.11.2022 JP 2022188062

(71) Applicant: **Toray Industries, Inc.**
**Tokyo 103-8666 (JP)**

(72) Inventors:
• **KATO Satoshi**
**Otsu-shi, Shiga 520-8558 (JP)**
• **NISHIGUCHI Yoshiki**
**Otsu-shi, Shiga 520-8558 (JP)**

(74) Representative: **Hoefer & Partner Patentanwälte mbB**
**Pilgersheimer Straße 20**
**81543 München (DE)**

(54) **SEPARATION MEMBRANE, METHOD FOR MANUFACTURING SAME, FILTRATION METHOD, AND MEMBRANE FILTRATION DEVICE**

(57)     The present invention provides a separation membrane having a porous resin layer that includes a polymer having a polyvinylidene chloride resin as a main component. In the porous resin layer, the pore count A for pores having a surface pore diameter of 0.01 μm to less than 0.05 μm and the pore count B for pores having a surface pore diameter of 0.05 μm or more satisfy the relationship $2.0 \leq A/B \leq 15.0$. Additionally, in the porous resin layer, the surface pore-opening ratio is 10% or more. Microvoids having a minor diameter of 10 μm or more are present in a region within 15 μm from the surface of the porous resin layer.

*FIG. 1*

**Description**

TECHNICAL FIELD

The present invention relates to a separation membrane, a method for producing the separation membrane, a filtration method, and a membrane filtration device.

BACKGROUND ART

In recent years, separation membranes such as microfiltration membranes and ultrafiltration membranes have been used in various fields such as a water treatment field such as water purification or wastewater treatment, a medical field such as blood purification, and a food industry field.

For the separation membranes used in various ways as described above, when water permeability is reduced due to deposition, adhesion, clogging, or the like (fouling) of a separation target substance, operation stability may be hindered. In this case, it is necessary to increase an aeration volume of aeration cleaning or increase a chemical cleaning frequency, which leads to an increase in operation cost, and thus a separation membrane having high water permeability and low fouling is required. In the water purification treatment, for the purpose of sterilizing permeated water and preventing membrane biofouling, a sterilizing agent such as sodium hypochlorite is added to a membrane module portion, or the membrane itself is cleaned with an acid, an alkali, chlorine, a surfactant, or the like. Therefore, the separation membrane is required to have chemical durability (chemical resistance). Furthermore, in the production of tap water, an accident in which chlorine-resistant pathogenic microorganisms, such as Cryptosporidium derived from feces and urine of livestock, cannot be treated in a water purification plant and are mixed with treated water has become apparent from the 1990s. In order to prevent such an accident, the separation membrane is required to have sufficient separation characteristics and high physical durability so that raw water is not mixed with treated water.

In addition, water treated with a separation membrane such as a microfiltration membrane or an ultrafiltration membrane may be used as industrial water, drinking water, or the like by being treated with a reverse osmosis membrane or a nanofiltration membrane. At this time, the water treated with a separation membrane such as a microfiltration membrane or an ultrafiltration membrane has a high biopolymer concentration, and when used as water to be treated with a reverse osmosis membrane or a nanofiltration membrane, fouling caused by the adhesion of the biopolymer may occur, and the stability of the operation may be hindered.

As a separation membrane exhibiting excellent chemical resistance, a separation membrane containing a polymer containing a polyvinylidene fluoride-based resin has been known. For example, Patent Literature 1 discloses a technique for improving low fouling properties and separability by controlling a pore size distribution of a separation membrane made of a polymer containing a polyvinylidene fluoride-based resin. Patent Literature 2 discloses a technique for increasing a pore size of a separation membrane and improving water permeability by selecting a long-chain branched fluoropolymer as a polyvinylidene fluoride-based resin contained in a separation membrane.

CITATION LIST

PATENT LITERATURE

Patent Literature 1: JP5310658B
Patent Literature 2: JP2016-510688A

SUMMARY OF INVENTION

TECHNICAL PROBLEM

However, in the case of a common separation membrane made of a polymer containing a polyvinylidene fluoride-based resin, which aims to achieve both the low fouling properties and the improved water permeability, it is not possible to sufficiently achieve both the performances in a trade-off relation, and one of them may be sacrificed. In addition, the separability and the water permeability are also in a trade-off relation, and one of them may be sacrificed.

Therefore, an object of the present invention is to provide a separation membrane which is excellent in low fouling properties, separability, and water permeability, and has high chemical resistance.

SOLUTION TO PROBLEM

The present invention relates to the following (1) to (13).

(1) A separation membrane including a porous resin layer containing a polymer containing a polyvinylidene fluoride-based resin as a main component,

in which in the porous resin layer, the number A of pores having a surface pore size of 0.01 $\mu$m or more and less than 0.05 $\mu$m and the number B of pores having a surface pore size of 0.05 $\mu$m or more have a relation of $2.0 \leq A/B \leq 15.0$,
in the porous resin layer, a surface open pore ratio is 10% or more, and
macrovoids having a minor axis of 10 $\mu$m or more are present in a region within 15 $\mu$m from a surface of the porous resin layer.

(2) The separation membrane according to the above (1), in which the A and the B have a relation of $A/B \geq 2.5$.
(3) The separation membrane according to the above (1) or (2), in which the B is less than 100 pores/$\mu$m$^2$.
(4) The separation membrane according to any one of the above (1) to (3), in which a value of a Lewis base component $\gamma_{m,-}$ of a surface free energy of the porous resin layer is 40 mJ/m$^2$ or more.
(5) The separation membrane according to the above (4), in which the value of the Lewis base component $y_{m,-}$ of the surface free energy of the porous resin layer is 45 mJ/m$^2$ or more.
(6) The separation membrane according to any one of the above (1) to (5), in which a porosity occupied by the macrovoids in the region within 15 $\mu$m from the surface of the porous resin layer is 15% or more.
(7) The separation membrane according to any one of the above (1) to (6), in which in the porous resin layer, a surface open pore ratio C of the pores having a surface pore size of 0.01 $\mu$m or more and less than 0.05 $\mu$m and a surface open pore ratio D of the pores having a surface pore size of 0.05 $\mu$m or more have a relation of $C/D \geq 0.6$.
(8) The separation membrane according to the above (7), in which the C and the D have a relation of $C/D \geq 0.8$.
(9) The separation membrane according to the above (8), in which the D is less than 8%.
(10) The separation membrane according to any one of the above (1) to (9), including the porous resin layer and a support.
(11) A liquid filtration method using the separation membrane according to any one of the above (1) to (10).
(12) A membrane filtration device using the separation membrane according to any one of the above (1) to (10).
(13) A method for producing the separation membrane according to any one of the above (1) to (10), the method including:

(i) a polymer solution preparation step of obtaining a polymer solution by using a polyvinylidene fluoride-based resin, a hydrophilic resin, a first non-solvent, a pore opening agent, and a solvent, and dissolving the polyvinylidene fluoride-based resin and the hydrophilic resin; and
(ii) a porous resin layer formation step of forming a porous resin layer by coagulating the polymer solution in a coagulation bath containing a second non-solvent.

ADVANTAGEOUS EFFECTS OF INVENTION

According to the present invention, it is possible to provide a separation membrane excellent in low fouling properties, separability, and water permeability while ensuring high chemical resistance by containing a polymer containing a polyvinylidene fluoride-based resin as a main component.

BRIEF DESCRIPTION OF DRAWINGS

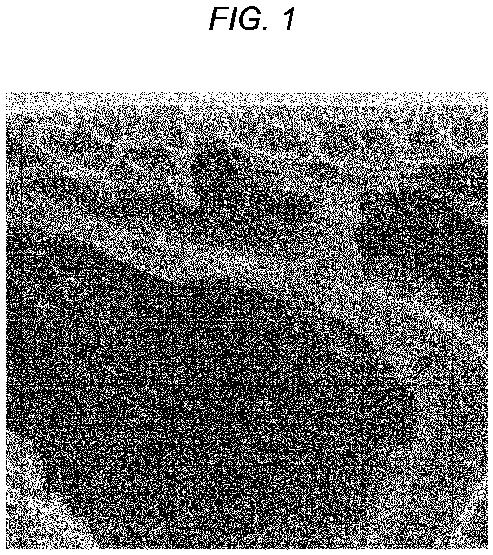

[FIG. 1] FIG. 1 is an enlarged image of a separation membrane, which illustrates a "three-dimensional network structure".

DESCRIPTION OF EMBODIMENTS

Hereinafter, embodiments of the present invention will be described in detail with reference to the drawings, but the present invention is not limited in any way by these embodiments. In the present description, a mass reference proportion (percentage, part, etc.) is the same as a weight reference proportion (percentage, part, etc.).

(Separation Membrane)

A separation membrane according to the present invention is required to have a porous resin layer formed of a polymer containing a polyvinylidene fluoride-based resin as a main component (hereinafter, may be referred to as "specific polymer").

The polyvinylidene fluoride-based resin refers to a vinylidene fluoride homopolymer or a vinylidene fluoride copolymer. The vinylidene fluoride copolymer herein refers to a polymer having a vinylidene fluoride residue structure, and is typically a copolymer of a vinylidene fluoride monomer and another fluorine-based monomer or the like. Examples of such a fluorine-based monomer include vinyl fluoride, tetrafluoroethylene, hexafluoropropylene, and trifluorochloroethylene. The vinylidene fluoride copolymer may be copolymerized with ethylene or the like other than the fluorine-based monomer to the extent that the effect of the present invention is not impaired.

The weight average molecular weight of the polyvinylidene fluoride-based resin is preferably 50,000 to 1,000,000 because the water permeability of the separation membrane decreases if it is too large, and the low fouling properties of the separation membrane decreases if it is too small. When the separation membrane is used for a water treatment application exposed to chemical cleaning, the weight average molecular weight is preferably 100,000 or more, and more preferably 150,000 or more. The weight average molecular weight is preferably 900,000 or less, and more preferably 800,000 or less.

The weight average molecular weight of the polyvinylidene fluoride-based resin can be measured by gel permeation chromatography.

In the present invention, "containing a polyvinylidene fluoride-based resin as a main component" means that a proportion of the polyvinylidene fluoride-based resin in the polymers constituting the porous resin layer is 50 mass% or more. In order to ensure high chemical resistance, the proportion is preferably 55 mass% or more, and more preferably 60 mass% or more.

In order to exhibit excellent low fouling properties and separability, at least one surface layer of the separation membrane according to the present invention is constituted by a porous resin layer, and in such a porous resin layer, the number A of pores having a surface pore size of 0.01 $\mu$m or more and less than 0.05 $\mu$m and the number B of pores having a surface pore size of 0.05 $\mu$m or more are required to have a relation of A/B $\geq$ 2.0. That is, it means that pores having a large size and pores having a small size are mixed at a specific proportion on one surface of the porous resin layer. A value of A/B is preferably 2.5 or more, and more preferably 3.0 or more. The term "surface pore size" as used herein refers to the size of pores on a face serving as the surface of the separation membrane.

On the other hand, the separation membrane according to the present invention is required to satisfy a relation of A/B $\leq$ 15.0 in order to exhibit excellent water permeability. The value of A/B is more preferably 12.0 or less, still more preferably 10.0 or less, and most preferably 8.0 or less.

In order to increase a biopolymer removal rate, B is preferably less than 100 pores/$\mu$m$^2$, and more preferably less than 90 pores/$\mu$m$^2$.

In addition, in order to exhibit excellent low fouling properties, A is preferably 200 pores/$\mu$m$^2$ or more, and more preferably 300 pores/$\mu$m$^2$ or more.

The separation membrane according to the present invention is required to have a surface open pore ratio of 10% or more in order to exhibit excellent low fouling properties and water permeability. When the surface open pore ratio is high, the target substance separated at each pore is dispersed, and fouling is less likely to occur. The surface open pore ratio is preferably 12% or more. The upper limit of the surface open pore ratio is not particularly limited, and it is practical that the surface open pore ratio is, for example, 30% or less.

The surface pore size and the surface open pore ratio of the porous resin layer are measured as follows.

The surface of the porous resin layer is observed using a scanning electron microscope (hereinafter, SEM) at a magnification of 10,000 times, and a diameter of a pore assumed to be a circle is calculated as a pore size based on an area of each pore, and can be defined as the pore size of each pore. A value obtained by dividing the sum of areas of the pores by an area of the measured field of view can be defined as the surface open pore ratio.

The separation membrane according to the present invention is required to have macrovoids in a region within 15 $\mu$m from the surface of the porous resin layer constituting the surface layer of the separation membrane in order to reduce the flow resistance when permeated water flows through the porous resin layer and exhibit high water permeability. Here, macrovoid in the present invention refers to a large void having a minor axis of 10 $\mu$m or more present in the porous resin layer, and refers to such a void when simply referred to as "macrovoid" hereinafter. The minor axis is a pore size measured in a direction parallel to the surface of the porous resin layer.

In the present invention, in order to exhibit high water permeability, a porosity occupied by such macrovoids in the region within 15 $\mu$m from the surface of the porous resin layer is preferably 15% or more, and more preferably 25% or more. In addition, from the viewpoint of the strength of the porous resin layer, the porosity occupied by such macrovoids in the region within 15 $\mu$m from the surface of the porous resin layer is preferably 80% or less, and more preferably 50% or less. The porosity occupied by such macrovoids in the region within 15 $\mu$m from the surface of the porous resin layer is, for example, 15% to 80%.

In the separation membrane according to the present invention, the value of the Lewis base component $\gamma_{m,-}$ of the surface free energy of the porous resin layer is preferably 40 mJ/m$^2$ or more.

The separation membrane according to the present invention is suitable for treating natural water such as river water or water containing a flocculant, activated sludge, or fermented sludge as a raw liquid. All of these liquids to be treated contain a wide variety of components and contain sugar and protein in the case of activated sludge or fermented sludge, but components that adhere to a membrane surface and clog pores are present as components constituting fouling of the separation membrane. As a result of intensive studies by the present inventors, it has been found that, by increasing the Lewis base component $\gamma_{m,-}$ of the surface free energy of the membrane, that is, the porous resin layer satisfying the above-described relation, the adhesion force between the separation membrane and the fouling component can be reduced, the fouling generation can be prevented, and a long-term stable operation is enabled.

The value of the Lewis base component $\gamma_{m,-}$ of the surface free energy of the porous resin layer is more preferably 45 mJ/m$^2$ or more.

The value of $\gamma_{m,-}$ can be calculated based on a static contact angle between the surface of the porous resin layer in water and air, a static contact angle between the surface of the porous resin layer in ethylene glycol and air, and a static contact angle between the surface of the porous resin layer in water and diiodomethane, which are measured by a contact angle meter.

In the separation membrane according to the present invention, the water contact angle of the surface of the porous resin layer is preferably 45° or less in order to exhibit excellent low fouling properties. In order to set the water contact angle of the surface of the porous resin layer to 45° or less, the polymers constituting the porous resin layer may contain a hydrophilic resin. The water contact angle of the surface of the porous resin layer is more preferably 40° or less.

Here, the term "hydrophilic resin" refers to a resin that has a high affinity for water and dissolves in water, or a resin having a smaller contact angle with respect to water than a polyvinylidene fluoride-based resin. Examples of the hydrophilic resin include cellulose esters such as cellulose acetate and cellulose acetate propionate, fatty acid vinyl esters, polyvinyl acetate, polyvinyl pyrrolidone, ethylene oxide, propylene oxide, polymers of acrylic acid esters or methacrylic acid esters such as polymethyl methacrylate, and copolymers of these polymers. The proportion of the hydrophilic resin in the entire polymer constituting the porous resin layer is preferably 0.1 mass% to 5 mass%.

In order to exhibit excellent low fouling properties and separability, in the porous resin layer of the separation membrane according to the present invention, a surface open pore ratio C of pores having a surface pore size of 0.01 $\mu$m or more and less than 0.05 $\mu$m and a surface open pore ratio D of pores having a surface pore size of 0.05 $\mu$m or more preferably have a relation of $C/D \geq 0.6$, and more preferably have a relation of $C/D \geq 0.8$. In addition, in order to exhibit excellent water permeability, the relation of $C/D \leq 5.0$ is preferable. The value of C/D is more preferably 4.0 or less, and still more preferably 3.0 or less. C/D satisfies a relation of, for example, $0.6 \leq C/D \leq 5.0$.

In order to increase the biopolymer removal rate, D is preferably less than 8%, and more preferably less than 7%.

In addition, in order to exhibit excellent low fouling properties, C is preferably 4% or more, and more preferably 5% or more.

It is preferable that macrovoids having a minor axis of 50 $\mu$m or more are present in the porous resin layer of the separation membrane according to the present invention in order to reduce flow resistance when permeated water flows through the porous resin layer. On the other hand, from the viewpoint of the strength of the porous resin layer, the size of the macrovoids is preferably limited to a minor axis of 300 $\mu$m or less. As described above, the minor axis is a pore size measured in a direction parallel to the surface of the porous resin layer.

In order to reduce the flow resistance when the permeated water flows through the porous resin layer, a ratio of the minor axis of the macrovoids present in the porous resin layer to the average pore size of the porous resin layer surface is preferably 700 or more, and more preferably 1,000 or more.

Here, the size of the macrovoids present in the porous resin layer can be determined by observing a cross section in a direction perpendicular to the surface of the porous resin layer with the SEM.

The porosity occupied by macrovoids can be determined by placing a porous resin layer dyed with a fluorescent substance such that the surface of the porous resin layer and an axial direction of a laser beam are perpendicular to each other, and observing a range of 200 $\mu$m $\times$ 200 $\mu$m as a plane parallel to the surface for each 0.2 $\mu$m in a region from the surface to 40 $\mu$m using a confocal laser scanning microscope, and extracting a cross-sectional image in a direction perpendicular to the surface of the porous resin layer from a three-dimensional image obtained by merging the obtained images.

In the present invention, the porous resin layer preferably has a three-dimensional network structure in order to further enhance separability by homogenization of the polymer density of the surface layer due to entanglement of the specific polymers. Here, the term "three-dimensional network structure" refers to a structure in which the polymers constituting the porous resin layer spread three-dimensionally in a network shape as shown in FIG. 1. The three-dimensional network structure has pores and voids partitioned by the polymers forming a network.

The separation membrane according to the present invention preferably includes the porous resin layer as described above and another layer.

Another layer described above is not particularly limited as long as it is a constituent element that overlaps the porous resin layer and can form a layer shape. Another layer described above is preferably a support. Here, the term "support" refers to one supporting the porous resin layer and imparting strength to the separation membrane. A material of the support is not particularly limited and may be an organic material, an inorganic material, or the like. An organic fiber is preferable from the viewpoint of easy weight reduction. The material is more preferably a woven fabric or a nonwoven fabric formed of organic fibers such as cellulose fibers, cellulose triacetate fibers, polyester fibers, polypropylene fibers, and polyethylene fibers. Among them, an inexpensive nonwoven fabric, which has a density relatively easy to control and is easy to produce, is preferable.

A thickness of the support is preferably in a range of 50 $\mu$m to 1 mm because it is difficult to maintain the strength as a separation membrane when the support is too thin, and the water permeability tends to decrease when the support is extremely thick. The thickness of the support is most preferably in a range of 70 $\mu$m to 500 $\mu$m.

In the present invention, a thickness of the porous resin layer is preferably 50 $\mu$m or more, more preferably 80 $\mu$m or more, and still more preferably 100 $\mu$m or more. The thickness of the porous resin layer is preferably 500 $\mu$m or less, more preferably 300 $\mu$m or less, and still more preferably 200 $\mu$m or less. The thickness of the porous resin layer is, for example, 50 $\mu$m to 500 $\mu$m. When the porous resin layer is too thin, the support is exposed, and stain components may adhere to the support to increase the filtration pressure, or the filtration performance may not be sufficiently recovered even by cleaning. When the porous resin layer is too thick, the amount of the permeated water may decrease.

It is preferable that a part of the resin forming the porous resin layer enters at least a surface layer portion of the support and forms a composite layer with the support in at least the surface layer portion. When the resin enters the support, the porous resin layer is firmly fixed to the support by a so-called anchor effect, and the porous resin layer can be prevented from peeling off from the support.

In the separation membrane according to the present invention, the pure water permeability at 25°C and 5 kPa is preferably 0.15 m$^3$/m$^2$/hr or more, and more preferably 0.5 m$^3$/m$^2$/hr or more, from the viewpoint of reducing the operating pressure and preventing the progress of fouling.

(Method for Producing Separation Membrane)

The separation membrane according to the present invention described above can be typically produced according to a method as described below.

The separation membrane according to the present invention can be produced, for example, according to a method including the following steps (i) and (ii):

(i) a polymer solution preparation step of obtaining a polymer solution by using a polyvinylidene fluoride-based resin, a hydrophilic resin, a first non-solvent, a pore opening agent, and a solvent, and dissolving the polyvinylidene fluoride-based resin and the hydrophilic resin; and

(ii) a porous resin layer formation step of forming a porous resin layer by coagulating the polymer solution in a coagulation bath containing a second non-solvent.

In addition, in the separation membrane according to the present invention, examples of the production method in a case where another layer is the support include a method including the steps (i) and (ii) and in which a porous resin layer is formed on at least one surface of the support in the porous resin layer formation step (ii).

That is, first, a coating of a raw liquid (polymer solution) containing a polyvinylidene fluoride-based resin, a hydrophilic resin, a first non-solvent, a pore opening agent, and a solvent is formed on the surface of the support described above, and the support is impregnated with the raw liquid. Thereafter, the support is immersed in a coagulation bath containing a second non-solvent to coagulate the resin and form a porous resin layer on the surface of the support. In general, the temperature of the raw liquid is preferably selected within a range of 15°C to 120°C from the viewpoint of membrane formability.

A density of the support is preferably 0.7 g/cm$^3$ or less, and more preferably 0.6 g/cm$^3$ or less. The density of the support in this range is suitable for receiving the resin for forming the porous resin layer and forming an appropriate composite layer of the support and the resin. However, when the density is extremely low, the strength of the separation membrane tends to decrease, and thus the density of the support is preferably 0.3 g/cm$^3$ or more. The density of the support is, for example, 0.3 g/cm$^3$ or more and 0.7 g/cm$^3$ or less. The density here is an apparent density, and can be determined based on the area, the thickness, and the weight of the support.

The non-solvent is a liquid that does not dissolve the resin. The first non-solvent in the above step (i) acts to control the size of the pores by controlling a rate of coagulation of the resin. As the first non-solvent in the above step (i), water or alcohols such as methanol and ethanol may be used. In the case where a hydrophilic resin is used, it is preferable to use a polyhydric alcohol in order to achieve a surface open pore ratio of 10% or more and exhibit excellent water permeability. In particular, glycerin is preferably contained in order to exhibit excellent low fouling properties and separability by setting the value of the Lewis base component $\gamma_{m,-}$ of the surface free energy of the porous resin layer to 40 mJ/m$^2$ or more and setting the value of A/B to 2.0 or more.

The pore opening agent is extracted when immersed in the coagulation bath to make the resin layer porous. It is preferable that the pore opening agent has high solubility in the coagulation bath. For example, inorganic salts such as calcium chloride and calcium carbonate can be used. Polyoxyalkylenes such as polyethylene glycol (PEG) and polypropylene glycol, surfactants, and the like can also be used. The pore opening agent can be freely selected, and a polymer containing PEG as a main component or a surfactant is preferable. Among them, as the pore opening agent, it is particularly preferable to use a polymer containing PEG having a weight average molecular weight of 10,000 or more and 50,000 or less as a main component, or a surfactant having a polyoxyalkylene structure, a fatty acid ester structure, and a hydroxy group. By using these as the pore opening agent, the porosity occupied by the macrovoids tends to be 15% or more in a region within 15 $\mu$m from the surface of the porous resin layer. Here, the expression "as a main component" means that the component is contained in an amount of 50 wt% or more of the pore opening agent component.

Examples of the surfactant having a polyoxyalkylene structure, a fatty acid ester structure, and a hydroxy group include polyethylene glycol monooleate, polyethylene glycol monostearate, polyoxyethylene sorbitan monolaurate (Tween 20), polyoxyethylene sorbitan monostearate (Tween 60), and polyoxyethylene sorbitan monooleate (Tween 80).

The solvent dissolves the resin. The solvent acts on the resin and the pore opening agent to promote the formation of the porous resin layer. As the solvent, NMP, N,N-dimethylacetamide (DMAc), N,N-dimethylformamide (DMF), dimethyl sulfoxide (DMSO), acetone, methyl ethyl ketone, or the like may be used. Among them, NMP, DMAc, DMF, and DMSO, which have high resin solubility, can be preferably used.

The second non-solvent in the above step (ii) acts to control the size of the pores or macrovoids by controlling the rate of coagulation of the resin. As the second non-solvent, water and alcohols such as methanol and ethanol may be used. Among them, the second non-solvent is preferably water in terms of ease of wastewater treatment and cost. The second non-solvent may be a mixture containing these.

It is preferable that, in the polymer solution preparation step, a polyvinylidene fluoride-based resin, a hydrophilic resin, a first non-solvent, a pore opening agent, and a solvent are used to obtain a polymer solution (raw liquid) in which the polyvinylidene fluoride-based resin and the hydrophilic resin are dissolved. In the raw liquid, the polyvinylidene fluoride-based resin is preferably in a range of 5 wt% to 30 wt%, the hydrophilic resin is preferably in a range of 0.1 wt% to 5 wt%, the pore opening agent is preferably in a range of 0.1 wt% to 15 wt%, the solvent is preferably in a range of 40 wt% to 94.4 wt%, and the first non-solvent is preferably in a range of 0.5 wt% to 20 wt%. When the amount of the polyvinylidene fluoride-based resin is extremely small, the strength of the separation membrane (porous resin layer) decreases, and when the amount of the polyvinylidene fluoride-based resin is too large, the water permeability may decrease. A content of the polyvinylidene fluoride-based resin in the raw liquid is more preferably in a range of 8 wt% to 20 wt%. When the amount of the hydrophilic resin is too small, the water contact angle of the surface of the porous resin layer may increase, and when the amount of the hydrophilic resin is too large, the surface open pore ratio may decrease. A content of the hydrophilic resin in the raw liquid is more preferably in a range of 0.2 wt% to 2 wt%. In addition, when the amount of the pore opening agent is too small, the water permeability may decrease, and when the amount of the pore opening agent is too large, the strength of the separation membrane (porous resin layer) may decrease. In addition, when the amount of the pore opening agent is extremely large, the pore opening agent remains in the porous resin layer and is eluted during use, and the water quality of the permeated water may deteriorate or the water permeability may fluctuate. The more preferable range of the content of the pore opening agent in the raw liquid is 0.5 wt% to 10 wt%. Furthermore, when the amount of the solvent is too small, the raw liquid is likely to gel, and when the amount of the solvent is too large, the strength of the separation membrane (porous resin layer) may decrease. A content of the solvent in the raw liquid is more preferably in a range of 60 wt% to 90 wt%. When a proportion of the first non-solvent in the raw liquid is too large, gelation of the raw liquid is likely to occur, and therefore, a content of the first non-solvent in the raw liquid is preferably in a range of 0.5 wt% to 20 wt%. The content of the first non-solvent is more preferably in a range of 0.5 wt% to 15 wt%.

In the porous resin layer formation step, the porous resin layer is preferably formed by coagulating the polymer solution (raw liquid) described above in the coagulation bath containing the second non-solvent. For the coagulation bath, the second non-solvent or a mixed liquid containing the second non-solvent and a solvent may be used. The content of the second non-solvent in the coagulation bath is preferably at least 80 wt%. When the content of the second non-solvent is too small, the coagulation rate of the resin is reduced, and thus the pore size of the surface is increased, or macrovoids are hardly generated. The content of the second non-solvent is more preferably in a range of 85 wt% to 100 wt%. When the temperature of the coagulation bath is too high, the coagulation rate becomes too fast, and conversely, when the temperature is too low, the coagulation rate becomes too slow. Therefore, it is generally preferable to select the temperature in a range of 15°C to 80°C. A more preferable temperature range is 20°C to 60°C.

In the case where the separation membrane in which another layer described above is a support is formed, a porous resin layer is preferably formed on at least one surface of the support in the porous resin layer formation step. The coating of the raw liquid can be formed on the support by applying the raw liquid to the support or by immersing the support in the raw liquid. When the raw liquid is applied, the raw liquid may be applied to one surface or both surfaces of the support.

At this time, according to the composition of the raw liquid, it is preferable to use a support having a density of 0.7 g/cm$^3$ or less because the support is appropriately impregnated with the raw liquid.

After the porous resin layer formation step, a cleaning step for removing the solvent and the pore opening agent is preferably provided. The cleaning method can be appropriately selected according to the types of the solvent or the pore opening agent, and is not particularly limited. Examples thereof include a method of immersing in hot water at 60°C to 100°C for 1 minute to 10 minutes.

A shape of the produced separation membrane can be controlled by a coagulation mode of the polymer solution in the porous resin layer formation step. In the case where a separation membrane in the form of a flat membrane is produced, a film-shaped support made of, for example, a nonwoven fabric, a metal oxide, or a metal and coated with a polymer solution can be immersed in a coagulation bath.

In the case where a separation membrane in the form of a hollow fiber membrane is produced, a polymer solution and a core liquid can be simultaneously discharged respectively from an outer periphery and a center of a double-tube nozzle to the coagulation bath containing the second non-solvent respectively. As the core liquid, a good solvent or the like in the polymer solution preparation step is preferably used. A separation membrane may be formed on a surface of the hollow fiber support made of a polymer, a metal oxide, a metal, or the like. Examples of a method for forming a separation membrane on a surface of a hollow fiber support made of a polymer include a method in which a solution serving as a raw material of the hollow fiber support and a polymer solution are simultaneously discharged using a triple-tube nozzle, and a method in which a polymer solution is applied to an outer surface of a hollow fiber support membrane-formed in advance and the resultant is passed through a second non-solvent in a coagulation bath.

The separation membrane according to the present invention can be applied to both an ultrafiltration membrane and a microfiltration membrane. The water to be treated with the separation membrane according to the present invention is not particularly limited, and is preferably used for separation of activated sludge containing a suspension of relatively large particles and biologically treating sewage or wastewater.

The water treated with the separation membrane according to the present invention is suitably used as water to be treated with a reverse osmosis membrane or a nanofiltration membrane. The separation membrane according to the present invention has high separability, and therefore, the water treated with the separation membrane according to the present invention has a low biopolymer concentration, and fouling due to adhesion of the biopolymer can be prevented in the case where the water treated with the separation membrane according to the present invention is used as water to be treated with a reverse osmosis membrane or a nanofiltration membrane.

The liquid can be filtered by a membrane filtration device using the separation membrane according to the present invention obtained as described above. Examples of the membrane filtration device include, but are not limited to, a device including a blower and a suction pump, in which a plurality of elements each having a separation membrane attached to both surfaces of a support frame having a filtrate outlet at an upper portion thereof via a plastic net are arranged in parallel and housed in a tank for water-to-be-treated having an air diffuser at a bottom portion thereof.

As a liquid filtration method, for example, a raw liquid of activated sludge or the like containing a suspension of relatively large particles and biologically treating sewage or wastewater is treated using the membrane filtration device to remove the suspension or the like contained in the raw liquid, but the method is not limited thereto.

Examples

The present invention will be specifically described below with reference to Examples, but the present invention is not limited thereto in any way.

(i) Surface Pore Size, Number of Pores, and Surface Open Pore Ratio of Porous Resin Layer

A surface of a porous resin layer in a separation membrane was observed using an SEM (S-5500; manufactured by Hitachi High-Tech Corporation) under the following observation conditions, and areas of the pores in an observation field were respectively measured. Diameters when assuming that the pores were circles were respectively calculated as the pore sizes based on the areas of the pores. The sum of the areas of the pores was divided by an area of the observation field to calculate the surface open pore ratio. The number of pores having a pore size of 0.01 μm or more and less than 0.05 μm was divided by the area of the observation field to calculate the number A of pores having a pore size of 0.01 μm or more and less than 0.05 μm per unit area, and the number of pores having a pore size of 0.05 μm or more was divided by the area of the observation field to calculate the number B of pores having a pore size of 0.05 μm or more per unit area. In addition, the area occupied by the pores having a pore size of 0.01 μm or more and less than 0.05 μm was divided by the area of the observation field to calculate the surface open pore ratio C of pores having a pore size of 0.01 μm or more and less than 0.05 μm, and the area occupied by the pores having a pore size of 0.05 μm or more was divided by the area of the observation field to calculate the surface open pore ratio D of pores having a pore size of 0.05 μm or more.

Acceleration voltage: 5 kV
Observation magnification: 30,000 times
Observation field: 4.233 $\mu$m $\times$ 3.175 $\mu$m
Image processing software: ImageJ (Wayne Rasband, National Institutes of Health)

The measurement was performed for arbitrary 10 fields of view, the number A of pores, the number B of pores, the surface open pore ratio C, and the surface open pore ratio D were calculated for each field of view, and the average values were respectively defined as the number A of pores, the number B of pores, the surface open pore ratio C, and the surface open pore ratio D.

(ii) Water Contact Angle

A separation membrane was cut into a square with a side length of 3 cm, and the square was immersed in an aqueous ethanol solution of 25 mass% overnight and then immersed and substituted in water for 2 hours or longer to prepare a sample. A sample was fixed to a three-phase sample stand (manufactured by Kyowa Interface Science Co., Ltd.) with a three-phase magnet (manufactured by Kyowa Interface Science Co., Ltd.) such that a surface of a porous resin layer faced downward, the sample was placed in a three-phase cell (manufactured by Kyowa Interface Science Co., Ltd.) containing distilled water, bubbles were generated on the surface of the porous resin layer, a static contact angle was measured under an atmosphere at 25°C with a contact angle meter (DropMaster DM500 manufactured by Kyowa Interface Science Co., Ltd.), and a value obtained by subtracting this value from 180° was defined as a water contact angle.

(iii) Lewis Base Component for Surface Free Energy of Porous Resin Layer

A separation membrane was cut into a square with a side length of 3 cm, and the square was immersed in an aqueous ethanol solution of 25 mass% overnight and then immersed and substituted in water for 2 hours or longer to prepare a sample. A sample was fixed to a three-phase sample stand (manufactured by Kyowa Interface Science Co., Ltd.) with a three-phase magnet (manufactured by Kyowa Interface Science Co., Ltd.) such that a surface of a porous resin layer faced downward, the sample was placed in a three-phase cell (manufactured by Kyowa Interface Science Co., Ltd.) containing distilled water or ethylene glycol, bubbles were generated on the surface of the porous resin layer, and a static contact angle was measured under an atmosphere at 25°C with a contact angle meter (DropMaster DM500 manufactured by Kyowa Interface Science Co., Ltd.). In addition, the sample was fixed to a three-phase sample stand with a three-phase magnet such that the surface of the porous resin layer faced upward, the sample was placed in a three-phase cell containing distilled water, diiodomethane was added dropwise to the surface of the porous resin layer, and a static contact angle was measured under an atmosphere at 25°C using a contact angle meter. A static contact angles $\theta_1$ of water, ethylene glycol, and diiodomethane with respect to the surface of the porous resin layer were determined based on the obtained contact angles, and were substituted into the following formula 1, respectively, and the simultaneous equations consisting of the four formulas were solved for $\gamma_{LW}$, $\gamma_+$, and $\gamma_-$ to determine the Lewis base component $\gamma_-$ of the surface free energy of the porous resin layer.

$$(\gamma_{m,LW}\ \gamma_{l,LW})^{1/2} + (\gamma_{m,+}\ \gamma_{l,-})^{1/2} + (\gamma_{m,-}\ \gamma_{l,+})^{1/2}$$
$$= (1 + \cos\theta_1)[\gamma_{l,LW} + 2(\gamma_{l,+}\ \gamma_{l,-})^{1/2}]/2 \qquad \text{(Formula 1)}$$

Here, $\gamma_{m,LW}$, $\gamma_{m,+}$, and $\gamma_{m,-}$ respectively represent a van der Waals component, a Lewis acid component, and a Lewis base component of the surface free energy of the porous resin layer, and $\gamma_{1,LW}$, $\gamma_{1,+}$, and $\gamma_{1,-}$ respectively represent a van der Waals component, a Lewis acid component, and a Lewis base component of the surface free energy of each liquid. As the surface free energy of each liquid used here, values in Table 1 proposed by Oss ("Fundamentals of Adhesion", L. H. Lee (Ed.), p153, Plenum ess, New York (1991)) were used.

(iv) Minor Axis of Macrovoids of Porous Resin Layer

A sample for cross-section measurement of a separation membrane was prepared according to a freeze ultrathin sectioning method, and a minor axis of the macrovoid was calculated based on the size of the macrovoid observed under the following observation conditions using an SEM (S-5500; manufactured by Hitachi High-Tech Corporation).

Acceleration voltage: 5 kV
Observation magnification: 500 times
Observation region: 256 $\mu$m $\times$ 192 $\mu$m

The measurement was performed for arbitrary 10 fields of view, the minor axes of the observed macrovoids were measured, and the average value was defined as the minor axis of the macrovoids of the porous resin layer.

(v) Porosity Occupied by Macrovoids in Region within 15 μm from Surface of Porous Resin Layer

A separation membrane was stained with a fluorescent substance (3,3,3',3'-tetramethyl-1,1'-bis(4-sulfobutyl) indocarbocyanine sodium) and placed such that a surface of a porous resin layer and an axial direction of a laser beam were perpendicular to each other, and a range of 200 μm × 200 μm as a plane parallel to the surface was observed every 0.2 μm in a region from the surface to 40 μm using a confocal laser scanning microscope (FV3000; manufactured by Olympus Corporation). A cross-sectional image in a direction perpendicular to the surface of the porous resin layer was extracted from a three-dimensional image obtained by merging the obtained images, and an area S1 from the surface to 15 μm was calculated. The observed cross-sectional image was binarized with a structure portion made of the resin and a pore portion, and an area S2 of the macrovoids occupying within 15 μm from the surface of the porous resin layer was calculated. The porosity (%) was calculated based on the following formula 2.

$$(\text{Porosity}) = S2/S1 \times 100 \quad (\text{Formula 2})$$

Arbitrary five images were measured, and an average value thereof was defined as the porosity.

(vi) Pure Water Permeability of Separation Membrane

The separation membrane was cut into a circle having a diameter of 50 mm, and the circle was set in a cylindrical filtration holder (Ultraholder UHP-43K, manufactured by Advantec Toyo Kaisha, Ltd.). Distilled water was preliminarily permeated at 25°C and a pressure of 5 kPa for 5 minutes, and subsequently permeated, permeated water was collected for 3 minutes, and an amount of the permeated water was converted into a numerical value per unit time (h) and unit membrane area ($m^2$) to calculate the pure water permeability.

(vii) Blockage Filtration Resistance of Separation Membrane

A separation membrane was cut into a circle having a diameter of 50 mm, and the circle was immersed in ethanol overnight, immersed and substituted in water for 2 hours or longer, and set in a cylindrical filtration holder (Ultraholder UHP-43K manufactured by Advantec Toyo Kaisha, Ltd.). An activated sludge (50 g) having a concentration of 7,000 mg/L was placed in the filtration holder, a stirring rate was adjusted to 450 rpm, a membrane permeation flux converted to a permeated water amount (cubic meter) per day per square meter of the membrane surface at an evaluation temperature of 25°C was filtered for 2 minutes at 3.0 $m^3/m^2$/day, and a sludge filtration resistance calculated based on the amount of permeated water for the first 5 seconds during filtration was defined as $Res_{Ax}$. x represents the number of repetitions of filtration of activated sludge for 2 minutes, and x = 1 in the first filtration. The filtration resistance was determined based on the following formula 5.

$$\text{Res} = P \times t \times S/(\mu \times L) \quad (\text{Formula 5})$$

Res: filtration resistance
P: evaluation pressure
t: filtration time
S: membrane area
μ: viscosity
L: amount of filtrate

After the filtration was stopped, stirring was performed at a stirring rate of 450 rpm for 1 minute. The residual activated sludge solution in the filtration holder was taken out while the separation membrane was set in the filtration holder, the filtration holder was filled with distilled water, and stirring was performed at a stirring rate of 450 rpm for 1 minute.
The filtration of the activated sludge for 2 minutes and cleaning of the membrane were repeated, and $Res_{A1}$ to $Res_{A5}$ were measured. $Res_{An+1} - Res_{An}$ were determined for a value of n from 1 to 4, and an average value thereof was defined as the blockage filtration resistance increase degree. The low fouling properties of the separation membrane can be evaluated as excellent as the respective values of the blockage filtration resistance increase degree are reduced. In Tables 2 and 3, the blockage filtration resistance increase degree is described as "blockage filtration resistance".

(viii) Removability of Biopolymer of Separation Membrane

A separation membrane was cut into a circle having a diameter of 50 mm, and the circle was immersed in an aqueous ethanol solution of 25 mass% overnight, then immersed and substituted in water for 2 hours or longer, and set in a cylindrical filtration holder (Ultraholder UHP-43K manufactured by Advantec Toyo Kaisha, Ltd.). Activated sludge (50 g) having a concentration of 7,000 mg/L was placed in a filtration holder and the stirring rate was adjusted to 450 rpm, followed by filtering 20 g at an evaluation temperature of 25°C and an evaluation pressure of 5 kPa. The concentration of biopolymers contained in the activated sludge and the filtrate was measured using a size-exclusion liquid chromatography (LC-OCD Model 8, manufactured by DOC-Labor), and a biopolymer removal rate was determined based on the following formula 6.

$$Rej = 100 \times (1 - CP/CF) \qquad (\text{Formula } 6)$$

Rej: biopolymer removal rate
CF: concentration of biopolymers in raw water
CP: concentration of biopolymers in filtrate

(ix) Method for Producing Reverse Osmosis Membrane

A 15.7 wt% DMF solution of polysulfone was cast on a polyester nonwoven fabric (air permeability: 0.5 cc/cm$^2$/sec to 1 cc/cm$^2$/sec) to a thickness of 200 $\mu$m at room temperature (25°C), and the polyester nonwoven fabric was immediately immersed in pure water, and left to stand for 5 minutes to prepare a microporous support membrane (thickness: 210 $\mu$m to 215 $\mu$m). The obtained microporous support membrane was cut into a square with a side length of 20 cm, and the square was fixed to a metal frame, followed by immersing in a 1.8 wt% aqueous solution of m-phenylenediamine as a polyfunctional amine aqueous solution for 2 minutes. The support membrane was slowly pulled up in a vertical direction from the aqueous solution, and nitrogen was blown from an air nozzle to remove the excessive aqueous solution from a surface of the support membrane. Thereafter, 25 ml of an n-decane solution containing 0.065 wt% of trimesic acid chloride at 25°C was poured into the frame such that the surface of the support membrane was completely wetted, followed by being left to stand for 1 minute from the initial contact between the n-decane solution and the support membrane. Next, in order to remove an excess solution from the membrane, the membrane was held vertically for 1 minute and drained, and then cleaned with hot water at 80°C for 2 minutes. The cleaned membrane was immersed in a 0.3 wt% sodium nitrite aqueous solution having a pH of 3 at 35°C for 1 minute, and then immersed in a 0.1 wt% sodium sulfite aqueous solution for 2 minutes to obtain a reverse osmosis membrane.

(x) Permeated Water Amount Retention Rate of Reverse Osmosis Membrane

A separation membrane was cut into a circle having a diameter of 50 mm, and the circle was immersed in an aqueous ethanol solution of 25 mass% overnight, then immersed and substituted in water for 2 hours or longer, and set in a cylindrical filtration holder (Ultraholder UHP-43K manufactured by Advantec Toyo Kaisha, Ltd.). Activated sludge (50 g) having a concentration of 7,000 mg/L was placed in a filtration holder, the stirring rate was adjusted to 450 rpm, and 25 g was filtered at an evaluation temperature of 25°C and an evaluation pressure of 5 kPa. This operation was performed twice to obtain 50 g of filtrate in total.

In addition, the reverse osmosis membrane obtained in the item (viii) was cut into a circle having a diameter of 50 mm, and the circle was immersed in pure water overnight and then set in a cylindrical filtration holder (Ultraholder UHP-43K manufactured by Advantec Toyo Kaisha, Ltd.). Then, the filtrate (50 g) for the separation membrane was placed into the filtration holder, and 5 g of the filtrate was filtered at an evaluation temperature of 25°C and an evaluation pressure of 0.4 MPa. An amount of permeated water $L_1$ in the first 1 minute during filtration and an amount of permeated water $L_2$ in the last 5 minutes were measured, and the permeated water amount retention rate $L_2/(5 \times L_1)$ was determined.

(Example 1)

To polyvinylidene fluoride (hereinafter, referred to as "PVDF") (weight average molecular weight: 600,000) and cellulose acetate (hereinafter, referred to as "CA"), DMF as a solvent, PEG (weight average molecular weight: 20,000) as a pore opening agent, and glycerin as a first non-solvent were added, followed by sufficiently stirring at a temperature of 100°C to prepare a polymer solution having composition ratios shown below.

PVDF: 11 wt%

CA: 0.4 wt%
DMF: 73 wt%
PEG: 9 wt%
Glycerin: 6.6 wt%

Next, the prepared polymer solution was applied to a surface of a polyester fiber nonwoven fabric having a density of 0.6 g/cm$^3$ as a support. Immediately after the application, the polyester fiber nonwoven fabric was immersed in pure water at 20°C for 5 minutes to form a porous resin layer. The polyester fiber nonwoven fabric was further immersed in hot water at 90°C for 2 minutes to wash away DMF as a solvent and PEG as a pore opening agent, and a separation membrane in which the porous resin layer had a three-dimensional network structure was formed.

The evaluation results of the obtained separation membrane are shown in Table 2. The value of the number A of pores having a surface pore size of 0.01 $\mu$m or more and less than 0.05 $\mu$m in the porous resin layer was 299 pores/$\mu$m$^2$, the value of the number B of pores having a surface pore size of 0.05 $\mu$m or more was 81 pores/$\mu$m$^2$, and the value of A/B was 3.7. The surface open pore ratio was 12.6%. The water contact angle was 39.2°. The value of $\gamma_{m,-}$ was 50 mJ/m$^2$. The value of the surface open pore ratio C of pores having a surface pore size of 0.01 $\mu$m or more and less than 0.05 $\mu$m in the porous resin layer was 5.8%, the value of the surface open pore ratio D of pores having a surface pore size of 0.05 $\mu$m or more was 6.7%, and the value of C/D was 0.9. The porosity occupied by macrovoids in a region within 15 $\mu$m from the surface of the porous resin layer was 37.3%, and all of the pure water permeability as an index of water permeability, the blockage filtration resistance increase degree as an index of low fouling performance, and the biopolymer removal rate as an index of removal performance exhibited excellent values.

(Example 2)

A separation membrane in which a porous resin layer had a three-dimensional network structure was formed in the same manner as in Example 1 except that the composition of the polymer solution was as follows.

PVDF: 12 wt%
CA: 0.4 wt%
DMF: 72 wt%
PEG: 9 wt%
Glycerin: 6.6 wt%

The evaluation results of the obtained separation membrane are shown in Table 2. The value of A was 333 pores/$\mu$m$^2$, the value of B was 74 pores/$\mu$m$^2$, and the value of A/B was 4.5. The surface open pore ratio was 12.2%. The water contact angle was 42.6°. The value of $\gamma_{m,-}$ was 53 mJ/m$^2$. The value of C was 6.4%, the value of D was 5.8%, and the value of C/D was 1.1. The porosity occupied by macrovoids in a region within 15 $\mu$m from the surface of the porous resin layer was 24.9%, and all of the pure water permeability, the blockage filtration resistance increase degree, and the biopolymer removal rate exhibited excellent values.

(Example 3)

A separation membrane in which a porous resin layer had a three-dimensional network structure was formed in the same manner as in Example 1 except that the composition of the polymer solution was as follows. Here, EG represents ethylene glycol.

PVDF: 11 wt%
CA: 0.4 wt%
DMF: 70 wt%
PEG: 9 wt%
Glycerin: 6.6 wt%
EG: 3 wt%

The evaluation results of the obtained separation membrane are shown in Table 2. The value of A was 363 pores/$\mu$m$^2$, the value of B was 85 pores/$\mu$m$^2$, and the value of A/B was 4.3. The surface open pore ratio was 13.1%. The water contact angle was 42.5°. The value of $\gamma_{m,-}$ was 58 mJ/m$^2$. The value of C was 7.3%, the value of D was 6.6%, and the value of C/D was 1.1. The porosity occupied by macrovoids in a region within 15 $\mu$m from the surface of the porous resin layer was 32.8%, and all of the pure water permeability, the blockage filtration resistance increase degree, and the biopolymer removal rate exhibited excellent values.

(Example 4)

A separation membrane in which a porous resin layer had a three-dimensional network structure was formed in the same manner as in Example 1 except that the composition of the polymer solution was as follows.

PVDF: 12 wt%
CA: 0.4 wt%
DMF: 69 wt%
PEG: 9 wt%
Glycerin: 6.6 wt%
EG: 3 wt%

The evaluation results of the obtained separation membrane are shown in Table 2. The value of A was 384 pores/$\mu$m$^2$, the value of B was 57 pores/$\mu$m$^2$, and the value of A/B was 6.7. The surface open pore ratio was 10.4%. The water contact angle was 40.8°. The value of $\gamma_{m,-}$ was 56 mJ/m$^2$. The value of C was 6.5%, the value of D was 3.9%, and the value of C/D was 1.7. The porosity occupied by macrovoids in a region within 15 $\mu$m from the surface of the porous resin layer was 27.5%, and all of the pure water permeability, the blockage filtration resistance increase degree, and the biopolymer removal rate exhibited excellent values.

(Comparative Example 1)

A separation membrane in which a porous resin layer had a three-dimensional network structure was formed in the same manner as in Example 1 except that the composition of the polymer solution was as follows.

PVDF: 11 wt%
DMF: 73.4 wt%
PEG: 9 wt%
Glycerin: 6.6 wt%

The evaluation results of the obtained separation membrane are shown in Table 3. The value of A was 111 pores/$\mu$m$^2$, the value of B was 97 pores/$\mu$m$^2$, and the value of A/B was 1.1. The surface open pore ratio was 14.9%. The water contact angle was 53.5°. The value of $\gamma_{m,-}$ was 27 mJ/m$^2$. The value of C was 2.4%, the value of D was 12.4%, and the value of C/D was 0.2. The porosity occupied by macrovoids in a region within 15 $\mu$m from the surface of the porous resin layer was 29.1%, and the biopolymer removal rate was inferior to the results of Examples.

(Comparative Example 2)

A separation membrane in which a porous resin layer had a three-dimensional network structure was formed in the same manner as in Example 1 except that the composition of the polymer solution was as follows.

PVDF: 11 wt%
CA: 0.4 wt%
DMF: 79.6 wt%
PEG: 9 wt%

The evaluation results of the obtained separation membrane are shown in Table 3. The value of A was 59 pores/$\mu$m$^2$, the value of B was 81 pores/$\mu$m$^2$, and the value of A/B was 0.7. The surface open pore ratio was 15.7%. The water contact angle was 42.4°. The value of $\gamma_{m,-}$ was 56 mJ/m$^2$. The value of C was 1.3%, the value of D was 14.4%, and the value of C/D was 0.1. The porosity occupied by macrovoids in a region within 15 $\mu$m from the surface of the porous resin layer was 17.8%, and the biopolymer removal rate was inferior to the results of Examples.

(Comparative Example 3)

A separation membrane in which a porous resin layer had a three-dimensional network structure was formed in the same manner as in Example 1 except that the composition of the polymer solution was as follows.

PVDF: 11 wt%
DMF: 73.4 wt%

PEG: 9 wt%
$H_2O$: 6.6 wt%

The evaluation results of the obtained separation membrane are shown in Table 3. The value of A was 40 pores/$\mu m^2$, the value of B was 67 pores/$\mu m^2$, and the value of A/B was 0.6. The surface open pore ratio was 14.3%. The water contact angle was 50.7°. The value of $\gamma_{m,-}$ was 32 mJ/$m^2$. The value of C was 0.9%, the value of D was 13.4%, and the value of C/D was 0.1. The porosity occupied by macrovoids in a region within 15 $\mu m$ from the surface of the porous resin layer was 17.4%, and the blockage filtration resistance increase degree and the biopolymer removal rate were inferior to the results of Examples.

(Comparative Example 4)

A separation membrane in which a porous resin layer had a three-dimensional network structure was formed in the same manner as in Example 1 except that the composition of the polymer solution was as follows.

PVDF: 11 wt%
CA: 0.4 wt%
DMF: 82 wt%
$H_2O$: 6.6 wt%

The evaluation results of the obtained separation membrane are shown in Table 3. The value of A was 122 pores/$\mu m^2$, the value of B was 54 pores/$\mu m^2$, and the value of A/B was 2.3. The surface open pore ratio was 7.9%. The water contact angle was 43.7°. The value of $\gamma_{m,-}$ was 46 mJ/$m^2$. The value of C was 2.9%, the value of D was 5.0%, and the value of C/D was 0.6. The porosity occupied by macrovoids in a region within 15 $\mu m$ from the surface of the porous resin layer was 21.2%, and the blockage filtration resistance increase degree was inferior to the results of Examples.

(Permeated Water Amount Retention Rate of Reverse Osmosis Membrane)

The permeated water amount retention rate of the reverse osmosis membrane was evaluated using the filtrate for the separation membranes described in Example 1 and Comparative Example 1.
When the filtrate for the separation membrane in Example 1 was used, the permeated water amount retention rate of the reverse osmosis membrane was 0.60. When the filtrate for the separation membrane in Comparative Example 1 was used, the permeated water amount retention rate of the reverse osmosis membrane was 0.31. When the filtrate for the separation membrane in Example 1 was used, the permeated water amount retention rate of the reverse osmosis membrane exhibited an excellent value.

Table 1

|  | $\gamma_{l.LW}$ (mJ/$m^2$) | $\gamma_{l,+}$ (mJ/$m^2$) | $\gamma_{l,-}$ (mJ/$m^2$) |
|---|---|---|---|
| Water | 21.8 | 25.5 | 25.5 |
| Ethylene glycol | 29.0 | 1.92 | 47.0 |
| Diiodomethane | 50.8 | 2.28 | 39.6 |

Table 2

|  | Unit | Example 1 | Example 2 | Example 3 | Example 4 |
|---|---|---|---|---|---|
| Polymer solution composition ratio | - | PVDF: 11 wt% CA: 0.4 wt% DMF: 73 wt% PEG: 9 wt% Glycerin: 6.6 wt% | PVDF: 12 wt% CA: 0.4 wt% DMF: 72 wt% PEG: 9 wt% Glycerin: 6.6 wt% | PVDF: 11 wt% CA: 0.4 wt% DMF: 70 wt% PEG: 9 wt% Glycerin: 6.6 wt% EG: 3 wt% | PVDF: 12 wt% CA: 0.4 wt% DMF: 69 wt% PEG: 9 wt% Glycerin: 6.6 wt% EG: 3 wt% |
| A value | pores/$\mu m^2$ | 299 | 333 | 363 | 384 |

(continued)

| | Unit | Example 1 | Example 2 | Example 3 | Example 4 |
|---|---|---|---|---|---|
| B value | pores/$\mu$m$^2$ | 81 | 74 | 85 | 57 |
| A/B value | - | 3.7 | 4.5 | 4.3 | 6.7 |
| Water contact angle | ° | 39.2 | 42.6 | 42.5 | 40.8 |
| $\gamma_{m,-}$ | mJ/m$^2$ | 50 | 53 | 58 | 56 |
| Surface open pore ratio | % | 12.6 | 12.2 | 13.1 | 10.4 |
| C value | % | 5.8 | 6.4 | 7.3 | 6.5 |
| D value | % | 6.7 | 5.8 | 6.6 | 3.9 |
| C/D value | - | 0.9 | 1.1 | 1.1 | 1.7 |
| Porosity occupied by macrovoids in region within 15 $\mu$m from surface layer | % | 37.3 | 24.9 | 32.8 | 27.5 |
| Pure water permeability | m$^3$/m$^2$/hr | 0.6 | 0.46 | 0.5 | 0.35 |
| Clogging filtration resistance | 10$^{10}$/m | 143 | 136 | 145 | 137 |
| Biopolymer removal rate | % | 55 | 60 | 55 | 57 |

Table 3

| | Unit | Comparative Example 1 | Comparative Example 2 | Comparative Example 3 | Comparative Example 4 |
|---|---|---|---|---|---|
| Polymer solution composition ratio | | PVDF: 11 wt% DMF: 73.4 wt% PEG: 9 wt% Glycerin: 6.6 wt% | PVDF: 11 wt% CA: 0.4 wt% DMF: 79.6 wt% PEG: 9 wt% | PVDF: 11 wt% DMF: 73.4 wt% PEG: 9 wt% H$_2$O: 6.6 wt% | PVDF: 11 wt% CA: 0.4 wt% DMF: 82 wt% H$_2$O: 6.6 wt% |
| A value | pores/$\mu$m$^2$ | 111 | 59 | 40 | 122 |
| B value | pores/$\mu$m$^2$ | 97 | 81 | 67 | 54 |
| A/B value | - | 1.1 | 0.7 | 0.6 | 2.3 |
| Water contact angle | ° | 53.5 | 42.4 | 50.7 | 43.7 |
| $\gamma_{m,-}$ | mJ/m$^2$ | 27 | 56 | 32 | 46 |
| Surface open pore ratio | % | 14.9 | 15.7 | 14.3 | 7.9 |
| C value | % | 2.4 | 1.3 | 0.9 | 2.9 |
| D value | % | 12.4 | 14.4 | 13.4 | 5.0 |
| C/D value | - | 0.2 | 0.1 | 0.1 | 0.6 |
| Porosity occupied by macrovoids in region within 15 $\mu$m from sur-face layer | % | 29.1 | 17.8 | 17.4 | 21.2 |
| Pure water permeability | m$^3$/m$^2$/hr | 1.02 | 1.55 | 0.61 | 0.53 |
| Clogging filtration resistance | 10$^{10}$/m | 112 | 168 | > 300 | 214 |
| Biopolymer removal rate | % | 28 | 11 | 37 | 80 |

Although the present invention has been described in detail with reference to specific embodiments, it is apparent to those skilled in the art that various changes and modifications can be made without departing from the spirit and scope of the present invention.

Note that, the present application is based on a Japanese patent application (No. 2022-157515) filed on September 30, 2022 and a Japanese patent application (No. 2022-188062) filed on November 25, 2022, the contents of which are incorporated herein by reference.

INDUSTRIAL APPLICABILITY

The separation membrane according to the present invention is excellent in low fouling properties, separability, and water permeability while ensuring high chemical resistance, and therefore, the separation membrane is suitable for use in various fields such as a water treatment field such as water purification or drainage treatment, a medical field such as blood purification, and a food industry field.

**Claims**

1. A separation membrane comprising a porous resin layer containing a polymer containing a polyvinylidene fluoride-based resin as a main component,

   wherein in the porous resin layer, the number A of pores having a surface pore size of 0.01 $\mu$m or more and less than 0.05 $\mu$m and the number B of pores having a surface pore size of 0.05 $\mu$m or more have a relation of $2.0 \leq A/B \leq 15.0$,
   in the porous resin layer, a surface open pore ratio is 10% or more, and
   macrovoids having a minor axis of 10 $\mu$m or more are present in a region within 15 $\mu$m from a surface of the porous resin layer.

2. The separation membrane according to claim 1, wherein the A and the B have a relation of $A/B \geq 2.5$.

3. The separation membrane according to claim 1, wherein the B is less than 100 pores/$\mu$m$^2$.

4. The separation membrane according to claim 1, wherein a value of a Lewis base component $\gamma_{m,-}$ of a surface free energy of the porous resin layer is 40 mJ/m$^2$ or more.

5. The separation membrane according to claim 4, wherein the value of the Lewis base component $\gamma_{m,-}$ of the surface free energy of the porous resin layer is 45 mJ/m$^2$ or more.

6. The separation membrane according to claim 1, wherein a porosity occupied by the macrovoids in the region within 15 $\mu$m from the surface of the porous resin layer is 15% or more.

7. The separation membrane according to claim 1, wherein in the porous resin layer, a surface open pore ratio C of the pores having a surface pore size of 0.01 $\mu$m or more and less than 0.05 $\mu$m and a surface open pore ratio D of the pores having a surface pore size of 0.05 $\mu$m or more have a relation of $C/D \geq 0.6$.

8. The separation membrane according to claim 7, wherein the C and the D have a relation of $C/D \geq 0.8$.

9. The separation membrane according to claim 8, wherein the D is less than 8%.

10. The separation membrane according to claim 1, comprising:

    the porous resin layer; and
    a support.

11. A liquid filtration method using the separation membrane according to any one of claims 1 to 10.

12. A membrane filtration device using the separation membrane according to any one of claims 1 to 10.

13. A method for producing the separation membrane according to any one of claims 1 to 10, the method comprising:

(i) a polymer solution preparation step of obtaining a polymer solution by using a polyvinylidene fluoride-based resin, a hydrophilic resin, a first non-solvent, a pore opening agent, and a solvent, and dissolving the polyvinylidene fluoride-based resin and the hydrophilic resin; and

(ii) a porous resin layer formation step of forming a porous resin layer by coagulating the polymer solution in a coagulation bath containing a second non-solvent.

# FIG. 1

## INTERNATIONAL SEARCH REPORT

| International application No. |
|---|
| **PCT/JP2023/034606** |

| A. | CLASSIFICATION OF SUBJECT MATTER |
|---|---|

***B01D 69/02***(2006.01)i; ***B01D 69/10***(2006.01)i; ***B01D 71/34***(2006.01)i
FI:    B01D71/34; B01D69/02; B01D69/10

According to International Patent Classification (IPC) or to both national classification and IPC

| B. | FIELDS SEARCHED |
|---|---|

Minimum documentation searched (classification system followed by classification symbols)

B01D61/00-71/82; C02F1/44; C08J9/26; D01F6/08-12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2021/241514 A1 (TORAY INDUSTRIES, INC.) 02 December 2021 (2021-12-02) paragraphs [0011]-[0056], claims | 1-3, 6-13 |
| Y | JP 2011-189266 A (TORAY INDUSTRIES, INC.) 29 September 2011 (2011-09-29) claims, paragraphs [0042], [0043] | 1-3, 6-13 |
| Y | JP 58-91731 A (TEIJIN LTD.) 31 May 1983 (1983-05-31) example 1 | 1-3, 6-13 |
| Y | JP 2004-202438 A (TORAY INDUSTRIES, INC.) 22 July 2004 (2004-07-22) claims, paragraphs [0015], [0016] | 1-3, 6-13 |
| Y | JP 2006-231274 A (TORAY INDUSTRIES, INC.) 07 September 2006 (2006-09-07) claims, paragraphs [0021]-[0027] | 1-3, 6-13 |
| A | WO 2021/020571 A1 (TORAY INDUSTRIES, INC.) 04 February 2021 (2021-02-04) | 1-13 |

☐ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 November 2023** | **05 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/034606**

| Patent document cited in search report | | | Publication date (day/month/year) | Patent family member(s) | | | Publication date (day/month/year) |
|---|---|---|---|---|---|---|---|
| WO | 2021/241514 | A1 | 02 December 2021 | EP | 4159304 | A1 | |
| | | | | paragraphs [0012]-[0063], claims | | | |
| | | | | CN | 115551623 | A | |
| | | | | AU | 2021280539 | A1 | |
| JP | 2011-189266 | A | 29 September 2011 | (Family: none) | | | |
| JP | 58-91731 | A | 31 May 1983 | (Family: none) | | | |
| JP | 2004-202438 | A | 22 July 2004 | (Family: none) | | | |
| JP | 2006-231274 | A | 07 September 2006 | (Family: none) | | | |
| WO | 2021/020571 | A1 | 04 February 2021 | US | 2022/0266204 | A1 | |
| | | | | EP | 4005658 | A1 | |
| | | | | CN | 114206482 | A | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5310658 B
- JP 2016510688 A
- JP 2022157515 A
- JP 2022188062 A

**Non-patent literature cited in the description**

- **OSS**. Fundamentals of Adhesion. Plenum ess, 1991, 153